# EUROPEAN PATENT APPLICATION

(11) **EP 4 817 725 A1**
(43) Date of publication of application: **07.10.2026**
(21) Application number: 25465574.9
(22) Date of filing: 30.10.2025
(51) Int. Cl.: B01D 69/02, B01D 69/10, B01D 69/14, B01D 71/02, B01D 71/30

(54) **METHOD FOR PREPARING POLYVINYL CHLORIDE MEMBRANES MODIFIED WITH PHOTOCATALYSTS FOR USE IN THE ADSORPTION AND PHOTODEGRADATION OF THE DYE RHODAMINE 6G**

(30) Priority: 31.03.2025 RO 202500121
(71) Applicant: Institutul National de Cercetare-Dezvoltare pentru Fizica Materialelor-INCDFM Bucuresti, 077125 Magurele, Jud. Ilfov (RO)
(72) Inventor: ION, Smaranda, Bragadiru (RO); BURLANESCU, Teodora, Bucharest (RO); STEFANIA, Florica, Craiova (RO); ANDRONE, Andreea, Darasti-Ilfov (RO); BAIBARAC, Mihaela, Bucharest (RO); VADUVA, Mirela, Magurele (RO)
(74) Representative: Munteanu, Manuela-Cornelia

(57) **Abstract**

The invention relates to the field of polymer membranes with photocatalytic activity, and more specifically to a method for preparing a poly(vinyl chloride) (PVC) membrane modified with a TiO₂/S-SWNT composite photocatalyst. The method comprises obtaining the TiO₂/S-SWNT photocatalyst by solid-state interaction through grinding titanium dioxide nanoparticles with semiconducting single-walled carbon nanotubes (S-SWNT). A PVC membrane is subsequently prepared by dissolving poly(vinyl chloride) in an organic solvent, casting the resulting solution into an evaporation vessel, and removing the solvent in a controlled manner to form the membrane. The obtained photocatalyst is dispersed in distilled water, and the resulting aqueous suspension is uniformly sprayed onto the surface of the PVC membrane. After drying to constant weight, a photocatalytic composite membrane is obtained, consisting of a PVC matrix and a surface-active layer containing TiO₂/S-SWNT particles, capable of degrading organic pollutants, such as dyes in aqueous solutions, under visible light irradiation.

## Description

### The technical field

The present disclosure relates to the field of membranes and photocatalytic materials and, in particular, the invention relates to the method of preparing polyvinyl chloride (PVC) membranes modified with photocatalysts of the type of the TiO₂ nanoparticles and single-walled carbon nanotubes, with photocatalytic properties that allow the elimination of pollutants such as rhodamine 6G dye.

More specifically, the disclosure provides a process for producing PVC membranes with improved photocatalytic activity, suitable for degrading organic pollutants, such as dyes in aqueous solutions, under light irradiation.

### Technical status

Membranes (MEM) with photocatalytic activities used for the photodegradation of Brilliant Green (BG) and Indigo Carmine (IC) dyes [Ouafa Tahiri Alaoui, Quang Trong Nguyen, Chamekh Mbareck, Touria Rhlalou, Elaboration and study of poly(vinylidene fluoride)-anatase TiO2 composite membranes in photocatalytic degradation of dyes, Applied Catalysis A: General 358 (2009) 13-20] and of Rhodamine B [Yukun Li & Shuying Dong & Liang Zhu, Preparation of novel poly(vinylidene fluoride)/TiO2 photocatalysis membranes for use in direct contact membrane distillation, J Nanopart Res (2018) 20: 63] were prepared up to now by the phase inversion method using poly(vinylidene fluoride)/TiO₂ (PVDF/TiO₂) composites. Recent studies on the photocatalytic properties of PVDF/TiO₂ (anatase) membranes reported a photodegradation efficiency of rhodamine B (RhB) solution having a concentration of 15 mg/L between 65.78 and 96.31%, when the mass ratio of TiO₂ and PVDF was varied from 1:6 to 12:6, [Yukun Li & Shuying Dong & Liang Zhu, Preparation of novel poly(vinylidene fluoride)/TiO2 photocatalysis membranes for use in direct contact membrane distillation, J Nanopart Res (2018) 20: 63].

These mass ratios are equivalent to a TiO₂ concentration in the PVDF/TiO₂ type MEM mass of 14.3 wt.% and 66.67 wt.%, respectively. According to the reference [Yukun Li & Shuying Dong & Liang Zhu, Preparation of novel poly(vinylidene fluoride)/TiO2 photocatalysis membranes for use in direct contact membrane distillation, J Nanopart Res (2018) 20: 63], PVDF MEM was prepared by: a) adding graphene oxide layers, hydrated hydrazine and LiCl to the PVDF solution in dimethylacetamide (DMAc), the mixture being homogenized by magnetic stirring at temperatures of 60 ⁰C (mixture labeled as solution A), for 12 hours; b) mixtures of TiO₂ and PVDF in H₂O and DMAc with different mass ratios ranging from 0:6 to 12:6 were prepared under magnetic stirring at room temperature for 10 hours (mixture labeled as solution B); c) the successive deposition of solution A and then solution B, allowed the production of films which, by immersion in the bath with ethyl alcohol and then in the water bath, allowed the production of membranes which were then dried in air at room temperature, being then used in the treatment of water contaminated with pollutants.

The main disadvantages of PVDF/TiO₂ type membranes are: a) the high concentration of TiO₂ in the PVDF/TiO₂ type MEM mass can decrease the flow of water decontaminating organic pollutants as a consequence of filling the membrane pores with TiO₂ nanoparticles; b) the photodegradation efficiency of rhodamine B (RhB) 15 mg/L solution varies from 65.78 wt.% to 96.31 wt.% when the concentration of TiO₂ in the PVDF/TiO₂ MEM mass increases from 14.3 wt.% to 66.67 wt.%; c) the preparation time of MEM membranes is long, approx. 2 days and d) the need for a large number of reactants and stages in the preparation of the membranes.

### The technical problem that the invention solves

According to the invention, polyvinyl chloride (PVC) membranes modified with photocatalysts of the type of composites based on TiO₂ nanoparticles and single-walled carbon nanotubes (SWNT), hereinafter referred to as MEM, can be an alternative to PVDF/TiO₂ membranes, presenting as their main advantages: a) the deposition of the photocatalyst takes place on the surface of the PVC membrane, which avoids covering the photocatalyst with polymer, favoring the degradation of pollutants; b) the use of a lower concentration of photocatalyst deposited on the surface of the PVC/TiO₂/SWNT type MEM, which prevents clogging of the MEM pores; c) obtaining photodegradation efficiencies of rhodamine 6G (Rh6G) dye higher than 96.31%; d) a much shorter MEM preparation time, of a maximum of 3 hours, and e) a smaller number of reactants and steps for membrane preparation.

### The solution according to the invention

In order to solve the technical problems existing in the prior art, the present disclosure provides a technical solution of a method of preparing a membrane with photocatalytic properties with possible practical uses.

The method of preparing the polyvinyl chloride membrane modified with photocatalyst based on titanium dioxide (TiO₂) and single-wall carbon nanotubes highly separated in semiconducting tubes (S-SWNT), comprises the following steps: a) preparation of a TiO₂/S-SWNT composite photocatalyst through solid state interaction, by grinding of the two constituents: titanium dioxide (TiO₂) with single-wall carbon nanotubes highly separated in semiconducting tubes (S-SWNT), b) preparation of a polyvinyl chloride membrane by dissolving polyvinyl chloride (PVC) in an organic solvent, pouring the obtained solution into an evaporation vessel and controlled evaporation of the solvent until obtaining a polyvinyl chloride membrane; c) dispersing the obtained photocatalyst in distilled water; d) spraying the aqueous solution of the photocatalyst on the surface of the polyvinyl chloride membrane, e) drying the polyvinyl chloride membrane modified with the photocatalyst, until constant mass.

In stage a) of the preparation of the TiO₂/S-SWNT composite photocatalyst, the interaction time in the solid state is 15-30 min., preferably 20 min., at room temperature, 25 ± 1⁰C, using a concentration of semiconducting carbon nanotubes 1-2 wt.% and of TiO₂ 99-98 wt.% relative to the total mass of the composite.

In stage b) of preparing the polyvinyl chloride membrane, the concentration of polyvinyl chloride (PVC) in the organic solvent is preferably between 91 and 24.7 mg/ml, more preferably 49.5 mg/mL. Evaporation of the solvent is preferably carried out in a controlled manner, in the temperature range of 90 - 110 ⁰C, for 15-25 min.

The preparation of a PVC membrane can be achieved by dissolving polyvinyl chloride (PVC) in an organic solvent, such as tetrahydrofuran, N-methyl pyrrolidone, preferably tetrahydrofuran.

Obtaining the active photocatalytic membrane for the photodegradation of pollutants is achieved by spraying the aqueous solution of the photocatalyst on the surface of the polyvinyl chloride membrane followed by drying the polyvinyl chloride membrane in air. Drying is preferably carried out at a temperature between 90 and 110 ⁰C, for 2 hours, until constant mass.

The deposition of the photocatalyst on the surface of the PVC membrane has the advantage of avoiding the coating of the photocatalyst with polymer, and consequently favoring the degradation of the pollutant to be eliminated.

Moreover, the use of a lower concentration of photocatalyst deposited by spraying on the surface of the membrane has the effect of reducing the clogging of its pores.

Such a modified polyvinyl membrane may contain, in the solid state, between 83.2 and 94.8 wt.% polyvinyl chloride (PVC) and between 5.2 and 16.8 wt.% TiO₂/S-SWNT composite photocatalyst, preferably 91 wt.% PVC and 9 wt.% TiO₂ /S-SWNT.

The membranes obtained according to the invention show high photocatalytic activity and can be used to remove organic pollutants from water through photodegradation processes under light radiation, being applicable to the treatment of solutions or waste water containing pollutants, such as rhodamine 6G.

The method has the advantage of producing membranes in a short time and with fewer resources using a smaller number of reactants, in fewer reaction steps.

Such a method of eliminating organic pollutants such as rhodamine 6G from aqueous solutions involves contacting the membrane according to the invention and exposure to light, for the photodegradation of organic compounds to harmless products.

### Brief description of the figures:

In the following, a non-limiting embodiment of the invention is presented, in correlation with Figures 1 to 4, which represent:
Figure 1 shows the FTIR spectra of membranes of the type: PVC (a), PVC/TiO₂ (b), PVC/TiO₂/M+S - SWNT 1 wt.% (c), PVC/TiO₂/S - SWNT 1 wt.% (d), PVC/TiO₂/M - SWNT 1 wt.% (e).
Figure 2 shows the Raman spectra of membranes of the type: PVC (a), PVC/TiO₂ (b), PVC/TiO₂/M+S - SWNT 1 wt.% (c), PVC/TiO₂/S - SWNT 1 wt.% (d), PVC/TiO₂/M - SWNT 1 wt.% (e).
Figure 3 shows the UV-VIS spectra of the photodegradation of the aqueous solution of Rh6G 0.05 mM in the presence of membranes of the type: PVC/TiO₂ (a), PVC/TiO₂/M+S-SWNT 1 wt.% (b), PVC/TiO₂/M-SWNT 1 wt.% (c), PVC/TiO₂/S-SWNT 1 wt.% (d), 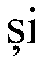 i PVC/TiO₂/M+S-SWNT 2 wt.% (e). The dependence of the photodegradation efficiency of Rh6G 0.05 mM in the case of membranes of the type: PVC/TiO₂, PVC/TiO₂/M+S-SWNT 1 wt.%, PVC/TiO₂/M-SWNT 1 wt.%, 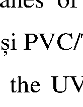 i PVC/TiO₂/S-SWNT 1 wt.% (f).
Figure 4 shows the UV-VIS spectra of the solution of Rh6G 0.05 mM in the presence of the membranes of the type PVC/TiO₂/S-SWNT 1wt.% by exposure to the light emitted by a halogen lamp for 480 min. when Rh6G solutions have pH equal to 1 (a), 2(b), 4 (c), 9 (d), 11(e) and 13 (f).

### Examples of realization

### Preparation of PVC membranes modified with TiO₂/SWNT photocatalysts

The preparation of PVC membranes modified with photocatalysts of the type TiO₂/SWNT by the phase inversion method involved the following steps:
a) preparation of different photocatalysts of type a₁) TiO₂ nanoparticles and single-walled carbon nanotubes containing 33 wt.% metal tubes and 66 wt.% semiconductor tubes (abbreviated M+S-SWNT) having the concentration of M+S-SWNT in the mass of TiO₂/M+S-SWNT composites equal to 1 wt.% and 2 wt.%, respectively; a₂) TiO₂ nanoparticles and single-walled carbon nanotubes highly separated in metallic tubes (98 wt.%), abbreviated TiO₂/M-SWNT, having the M-SWNT concentration in the mass of TiO₂/M-SWNT composites equal to 1 wt.%, and a₃) TiO₂ nanoparticles and single-walled carbon nanotubes highly separated in semiconductor tubes (99 wt. %), abbreviated TiO₂/S-SWNT, having the concentration of S-SWNT in the mass of TiO₂/S-SWNT composites equal to 1 wt.%; all photocatalysts were obtained by solid state interaction carried out by mortaring, at room temperature, 25±1 ⁰C, for 20 min. An alternative method for obtaining TiO₂/S-SWNT composites is the interaction of the TiO₂ colloidal solution with the aqueous S-SWNT solution;
b) obtaining PVC membranes, by preparing solutions of PVC in tetrahydrofuran (THF) having a concentration between 91 and 24.7 mg/ml, preferably 49.5 mg/mL, resulting from ultrasound for 20 min, which was poured into a Petri dish with a diameter between 6 and 9 cm, preferably 7 cm, in order to evaporate the THF at a temperature between 90-110 ⁰C, preferably 100⁰C, in a time interval of 15-25 min, preferably 20 min, the process taking place in a laboratory niche, having the air speed of 0.3 ~ 0.8 m/s and the volume of the exhaust system: 710 m³/h;
c) dispersion of 5 mg of each photocatalyst in 5 ml of distilled water by ultrasonication for 20 minutes;
d) spraying each photocatalyst in a single step, on the surface of the PVC membranes, prepared according to point b),
e) submitting the PVC membranes to a thermal treatment, at 100 ⁰C, for approx. 2 hours in order to fix the photocatalyst on the surface of the PVC membranes; the PVC membranes modified with photocatalysts are further thermally treated for 30 min., after which they are weighed, the process repeating itself until, after three successive weightings, the mass variations are only to the 4th decimal place.

The concentration of PVC and photocatalyst in the photocatalyst modified PVC membrane varies between 94.8 and 83.2 wt.% PVC, preferably 91 wt.% PVC, and between 5.2 - 16.8 wt.% TiO₂/SWNT type photocatalyst, preferably 9 wt.% TiO₂/SWNT.

Characterization of PVC membranes modified with TiO₂ nanoparticles and its composites with SWNTs was performed by FTIR spectroscopy and Raman scattering. FTIR spectra were recorded with FTIR spectrophotometer, model Vertex 80 from Bruker in total attenuated reflection geometry. Raman spectra were recorded with FTRaman spectrophotometer, model MultiRaman, from Bruker.

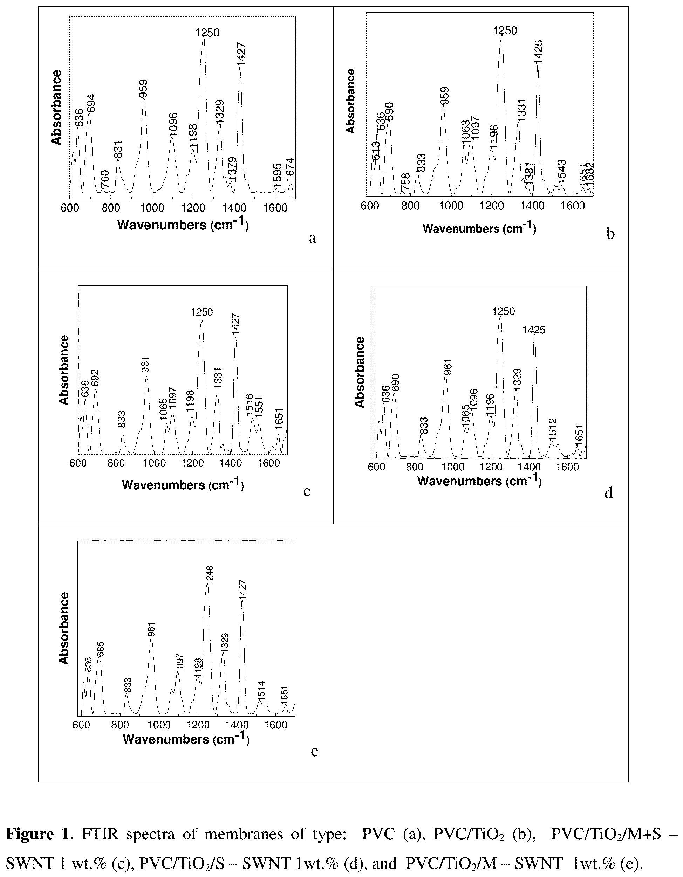

The main IR bands of PVC are located at 636, 694, 831, 959, 1096 and 1250 cm⁻¹ (Figure 1a), being attributed to vibrations of C-H bonds in the syndiotactic structure of PVC, stretching of C-Cl bonds in the isotactic structure of PVC, swinging of the C-H bond in the CH₂ group, C-H in the polymer with the configuration trans, C-H bond deformation and C-H bond swing in the polymer with the trans configuration.

Figure 1 shows the most important variations regarding the location of the IR band attributed to the mode of vibration of the C-H bond rocking in the polymer with the trans configuration, when it is observed that the maximum of the IR band is located in the case of composites: a) PVC/TiO₂ at 1238 cm⁻¹; b) PVC/TiO₂/M+S-SWNT at 1244 cm⁻¹; and c) PVC/TiO₂/M-SWNT and PVC/TiO₂/S-SWNT at 1244 cm⁻¹. These variations indicate the existence of an interaction between PVC and the catalysts used in the preparation of membranes of the type TiO₂, TiO₂/M+S-SWNT, TiO₂/M-SWNT and TiO₂/S-SWNT.

The Raman spectra of the membranes are dominated by the Raman lines of PVC. In the case of PVC MEM, the Raman lines are located at 363, 638-694, 1084-1174, 1335-1431, 2914 and 1972 cm⁻¹, these being attributed to the vibrational modes of C-Cl bonds in the trans configuration of the polymer, C-Cl bond stretching, C-C bond stretching, C-H bond symmetric stretching in the CH₂ group, of asymmetric stretching of the C-H bond in the CH₂ group and of asymmetric stretching of the C-H bond in the CH₃ group.

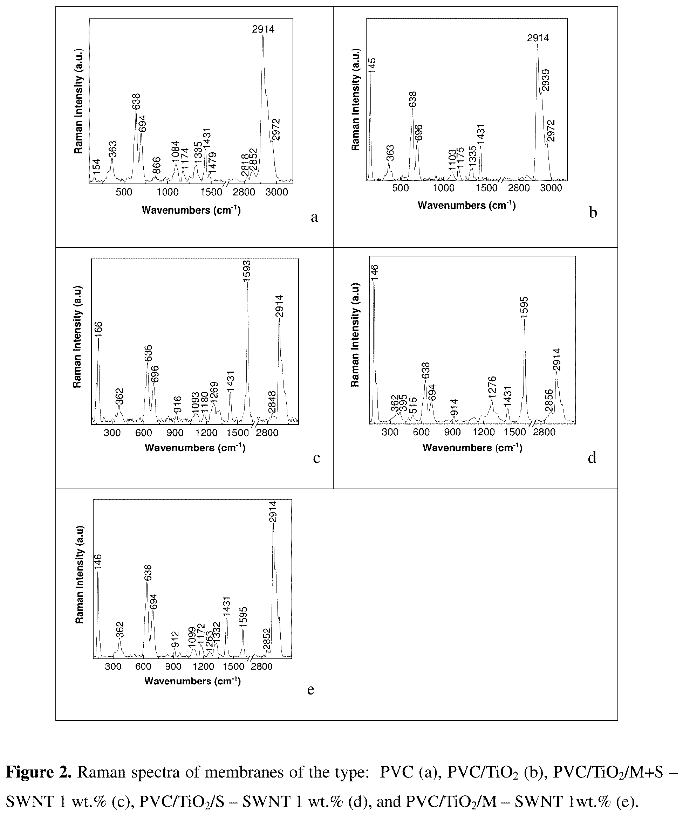

The main change induced in PVC vibrations in the presence of catalysts is the shift of the Raman line from 1335-1431 cm⁻¹ (Figure 2a) to 1269-1431 cm⁻¹ (Figure 2c) and 1276-1431 cm⁻¹ (Figure 2d).

Additionally, it is observed: a) the presence in all cases of the Raman line from 145-146 cm⁻¹ belonging to the vibrational mode E_{g} of TiO₂; b) the presence of the Raman line associated with the tangential mode of carbon nanotubes (labeled as the G band) located at 1593-1595 cm⁻¹ in PVC/TiO₂/M+S-SWNT, PVC/TiO₂/S-SWNT and PVC/TiO₂/M-SWNT type MEMs; c) band D attributed to the state of disorder in the composites containing M+S/SWNT, S-SWNT and M-SWNT, which is located in the three cases at 1273 cm⁻¹; d) in the case of composites of the type PVC/TiO₂/M+S-SWNT and PVC/TiO₂/S-SWNT, the Raman line at 164 cm⁻¹ is observed, which is attributed to the radial breathing mode (RBM) of carbon nanotubes

The change in the ratio between the intensities of the Raman lines located at 638 and 2914 cm⁻¹ in the case of PVC, PVC/TiO₂, PVC/TiO₂/M+S-SWNT, PVC/TiO₂/M-SWNT, and PVC/TiO₂/S-SWNT membranes from 0.48 to 0.52, 0.57, 0.56 and 0.82 indicates the generation of defects in the macromolecular chain of PVC, of the type ClCH=CH- and/or -CH=CCl- as a result of the chemical interaction of PVC with the photocatalysts mentioned above.

### Rh6G dye pollutant removal method

In order to highlight the photocatalytic properties of these membranes, a surface of 2 cm² of the initial membrane was used, cut in the form of a rectangle with a length of 2 cm and a width of 1 cm, which was immersed in a quartz cell with an optical path of 5 mm, which contained the dye solution 0.05 mM, the membrane in the dye solution being kept in the dark for 30 min in seeing the dye adsorbed.

After this period, the UV-VIS spectrum was measured, after which the cuvette containing the dye and the membrane was exposed to the light emitted by a halogen lamp for 10 min., when the UV-VIS spectrum was remeasured. This operation of measuring the UV-VIS spectra of the dye solution in the presence of the membrane after every 10 min of exposure to the light emitted by a halogen lamp was carried out for 480 min. The distance from the light source to the quartz cell was 10 cm. The efficiency of photodegradation of the dye was calculated with the formula D (%)= [(A₀ - A₁)/A₀] x 100, where D is the efficiency of photodegradation, A₀ absorbance at the moment of time (t) equal to 0 min. of irradiation, Aₜ is the absorbance every 10 min. of irradiation during 480 min.

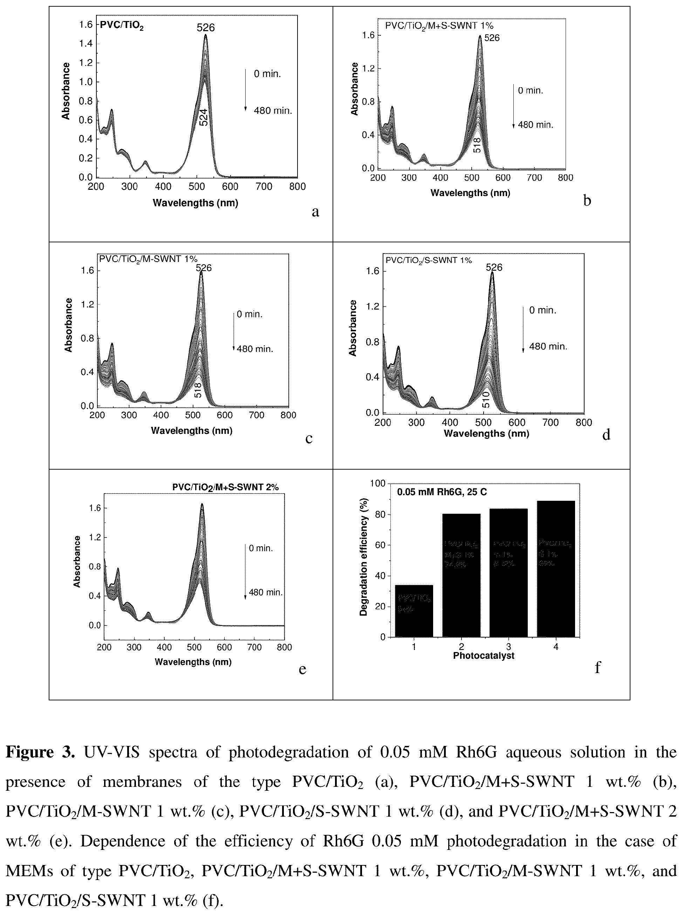

Figure 3 shows the UV-VIS spectra of the rhodamine 6G (Rh6G) 0.05 mM solution and their evolution in the presence of the MEMs prepared above by exposure to the light emitted by a halogen lamp with a power of 100W for 480 min. UV-VIS spectra were recorded with a UV-VIS-NIR spectrophotometer, model Lambda 950, from Perkin Elmer. The analysis of the UV-VIS spectra highlights a band with a maximum at 526 nm belonging to the chromophore groups of Rh6G.

Exposure to the light emitted by the halogen lamp leads to a gradual decrease in the absorbance of the 526 nm band. In the case of membranes of type PVC/TiO₂, PVC/TiO₂/M+S-SWNT 2 wt.%, PVC/TiO₂/M+S-SWNT 1 wt.%, PVC/TiO₂/M-SWNT 1 wt.%, and PVC/TiO₂/S-SWNT 1 wt.%, the photodegradation efficiency of Rh6G 0.05 mM, having pH equal to 7.4, was calculated to be equal to 34%, 78.8%, 74.9%, 81.2% and 89%.

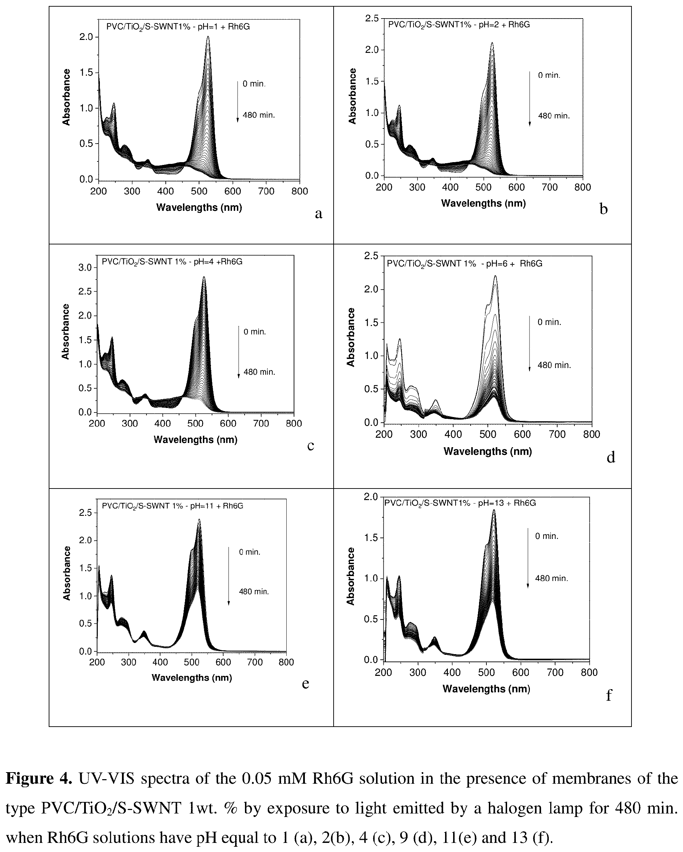

Figure 4 shows the dependence of the UV-VIS spectra of Rh6G 0.05 mM aqueous solutions with pH equal to 1, 2, 4, 9, 11 and 13, using membranes of the type PVC/TiO₂/S-SWNT 1wt.%. The photodegradation efficiency of 0.05 mM Rh6G solutions in the presence of membrane of the type PVC/TiO₂/S-SWNT 1 wt.% is equal to: a) 98% in the case of the solution with pH=1, b) 98.11%, in the case of the solution with pH=2, c) 93.24%, in the case of the solution with pH=4, d) 82.73%, in the case of the solution with pH=9, e) 53.56%, in the case of the solution with pH=11 and f) 61.41%, in the case of the solution with pH=13.

These results indicate the use of membrane of the type PVC/TiO₂/ S-SWNT 1wt.% with a high efficiency (between 89%-98.11%) for the removal of Rh6G pollutant from solutions with pH between 1 and 7.4.

## Claims

1. A method for the preparation of a polyvinyl chloride membrane modified with a photocatalyst based on titanium dioxide (TiO₂) nanoparticles and single-wall carbon nanotubes highly separated in semiconducting tubes (S-SWNT) for the photodegradation of pollutants such as rhodamine 6G dye, **characterized in that** the method comprises the following steps:
a) preparation of a TiO₂/S-SWNT composite photocatalyst by the solid-state interaction of titanium dioxide (TiO₂) with single-wall carbon nanotubes highly separated in semiconducting tubes (S-SWNT), for 20 min., at room temperature, 25 ± 1°C, using a concentration of S-SWNT of 1-2 wt.% and TiO₂ of 99-98 wt.% relative to the total mass of the composite;
b) preparation of a polyvinyl chloride membrane by dissolving polyvinyl chloride (PVC) in an organic solvent, with a concentration of polyvinyl chloride (PVC) in the organic solvent between 91 and 24.7 mg/ml, pouring the obtained solution into an evaporation vessel and controlled evaporation of the solvent in the temperature range of 90 - 110 ⁰C, for 15-25 min., until obtaining a polyvinyl chloride membrane;
c) dispersing the photocatalyst obtained in step a) in distilled water, until obtaining an aqueous photocatalyst solution with uniform dispersion;
d) spraying the aqueous photocatalyst solution obtained according to step (c), in a single step, on the surface of the polyvinyl chloride membrane, obtained according to step (b); and
e) obtaining the active photocatalytic membrane by drying in air the polyvinyl chloride membrane modified with photocatalyst obtained according to step (d), at a temperature between 90 and 110 ⁰C, until constant mass.

2. The method according to claim 1, **characterized in that** in step b) of preparing a polyvinyl chloride membrane by dissolving polyvinyl chloride (PVC) in an organic solvent, the organic solvent is tetrahydrofuran.

3. The method according to claim 1 or 2, **characterized in that** in stage b) of preparing the polyvinyl chloride membrane by dissolving polyvinyl chloride (PVC) in organic solvent, the concentration of polyvinyl chloride (PVC) in the organic solvent is 49.5 mg/mL.

4. The method according to any of the claims from 1 to 3, **characterized in that** the photocatalyst obtained in step a) of its preparation, contains single-walled carbon nanotubes highly separated in semiconducting tubes in a concentration of 1 wt.% relative to the mass of the photocatalyst.

5. A polyvinyl chloride membrane modified with photocatalysts based on titanium dioxide (TiO₂) nanoparticles and single-wall carbon nanotubes highly separated in semiconducting tubes (S-SWNTs), obtained according to any one of claims 1 to 4, containing, in the solid state, between 83.2 and 94.8 wt.% polyvinyl chloride (PVC) and between 5.2 and 16.8 wt.% TiO₂/S-SWNT composite photocatalyst.

6. The membrane according to claim 5, containing 91 wt.% PVC and 9 wt.% TiO₂/S-SWNT.

7. The membrane according to claim 5 or 6 **characterized in that** the TiO₂/S-SWNT photocatalytic layer is distributed on the surface of the polymer matrix and forms a photocatalytic layer.

8. A method of removing the rhodamine 6G dye pollutant from an aqueous solution, **characterized in that** the aqueous solution is placed and maintained in contact with the membrane according to one of claims 5 to 7 and then subjected to irradiation emitted by a light source.
